# EUROPÄISCHE PATENTSCHRIFT

(11) **EP 0 462 369 B1**
(45) Veröffentlichungstag und Bekanntmachung des Hinweises auf die Patenterteilung: **17.08.1994**
(21) Anmeldenummer: 91105561.4
(22) Anmeldetag: 09.04.1991
(51) Int. Cl.: B01D 33/048, B01D 33/056, B01D 29/09

(54) **Filtermittel**
Filter
Filtre

(30) Priorität: 19.06.1990 DE 4019500
(43) Veröffentlichungstag der Anmeldung: 27.12.1991
(73) Patentinhaber: HYDAC TECHNOLOGY GMBH, 66273 Sulzbach (DE)
(72) Erfinder: Teckentrup, Heinrich, W-6680 Neunkirchen 4 (DE)
(74) Vertreter: Patentanwälte Bartels und Partner

(56) Entgegenhaltungen:
- EP-A- 0 191 102
- EP-A- 0 322 750
- GB-A- 2 174 014
- US-A- 4 070 293

## Beschreibung

Die Erfindung betrifft ein Filtermittel mit den Merkmalen des Oberbegriffes des Anspruches 1.

Ein gattungsfremdes Filtermittel ist durch die DE-A-23 55 309 bekannt. Bei diesem bekannten Filtermittel ist das antreibbare Endlosband aus einem flexiblen porösen Werkstoff mit minimaler Steifigkeit gebildet, dessen Durchlässe aus Kapillaren bestehen, -die anziehend auf Flüssigkeiten wirken und die derart von dem Saugband aufnehm- und transportierbar sind. Diese Durchlässe sind von einem Filtermaterial in Form eines Siebbandes überdeckt, das als Endlosband ausgebildet die in einer Suspension befindliche Feststoffteile bei der Filtration zurückhält.

Sowohl das Saugband als auch das Siebband weisen hierbei jeweils einen eigenständigen Antrieb auf, die es erlauben, die beiden Bänder mit einer geringen Relativgeschwindigkeit zueinander zu bewegen, was bei manchen Anwendungsfällen die Trennung der Flüssigkeit von der Suspension erleichtert. Um dieses Filtermittel zum Einsatz zu bringen, sind also mehrere, in Anschaffung und Betrieb teure Antriebe notwendig und aufgrund der auch im synchronen Betrieb der Antriebe nicht ausschließbaren Relativbewegung der beiden Bänder zueinander, unterliegen diese einem raschen Verschleiß.

Bei einer anderen Art von bekannten Filtermitteln (US-A-4 390 428, US-A-3 288 296 und US-A-4 191 653) ist das Filtermaterial selbst als antreibbares Endlosband ausgebildet, das mittels geeigneter Fördermittel, beispielsweise in Form von Kettentrieben, bewegbar ist. Weitere dem Filtermaterial zugeordnete Endlosbänder sind nicht vorhanden. Beim Filtrieren mit diesen bekannten Filtermitteln kann es an den Rändern des Filtermaterials aufgrund von Aufwerfungen, insbesondere bei der Anfahr- oder Haltebewegung, zu Undichtigkeiten kommen, so daß die Suspension ungefiltert das Filtermittel umgehen kann und das Filtrat verunreinigt. Ferner unterliegen diese bekannten Filtermittel der Abnutzung, die durch die Reibung an feststehenden Anlageteilen bei der Bewegung während des Filtrierens entsteht.

Ein gattungsgleiches Filtermittel ist durch die EP-A-O 322 750 bekannt. Bei diesem bekannten Filtermittel, das aus mehreren Schichten besteht, wird auf einem flexiblen endlosen, mit Abflußkanälen ausgestatteten Band eine Wirrfaserschicht als Filterschicht aufgeklebt, wobei in der Befestigungszone Durchlaßöffnungen für die in das Band ablaufende Filterflüssigkeit gegeben sind. Die Wirrfaserschicht ist vorzugsweise aus einem Wirrfaservlies aus synthetischen Fasern gebildet, das als Wegwerfbahn oder -platte mit einem geeigneten Klebstoff auf dem Band derart aufgeklebt ist, daß der Klebstoff die Wirrfasern anlöst und damit sich vernetzt und beim Erhärten verklebt. Mit dem bekannten Filtermittel läßt sich zwar eine gute Filterqualität erzielen, jedoch ist die Wirrfaserschicht im Betrieb des Filtermittels je nach Anwendungsfall einem starken Verschleiß ausgesetzt, so daß häufige Austauschvorgänge notwendig werden, was mit entsprechend hohen Kosten einhergeht.

Ausgehend von diesem Stand der Technik liegt der Erfindung die Aufgabe zugrunde, ein Filtermittel zu schaffen, dessen Einsatz in Filtrieranlagen kostengünstig verwirklichbar ist, das eine lange Haltbarkeit aufweist und mit dem Undichtigkeiten beim Filtriervorgang mit Sicherheit vermeidbar sind. Diese Aufgabe wird mit den Merkmalen des Anspruches 1 erfindungsgemäß gelöst.

Dadurch, daß gemäß dem kennzeichnenden Teil des Anspruches 1 das Filtermittel ein zweites Endlosband mit Durchlässen aufweist, die sich mit den Durchlässen des anderen Endlosbandes im wesentlichen decken, daß die beiden Endlosbänder zumindest über das Klebemittel des einen Endlosbandes fest miteinander verbunden sind und daß das Filtermaterial zwischen den beiden Endlosbändern aufgenommen ist, decken die beiden Endlosbänder bis auf die Durchlässe das Filtermaterial ab, so daß dieses wie von zwei Schutzfilmen umgeben ist, was einer Abnutzung des an sich gegen Beanspruchung empfindlichen Filtermaterials entgegenwirkt.

Das Filtermaterial läßt sich mit den antreibbaren Endlosbändern für den Filtriervorgang bewegen, so daß für das Filtermittel selbst kein eigenständiges Antriebsmittel vorgesehen zu werden braucht. Durch die feste Verbindung mittels des Klebemittels ist ferner eine Relativbewegung zwischen den Endlosbändern und dem Filtermaterial auf jeden Fall ausgeschlossen, was insgesamt der Haltbarkeit des Filtermittels zugute kommt. Auch kann das jeweilige Endlosband sehr robust mit einer geringen Neigung zur Abnutzung ausgelegt sein und übernimmt dann eine Schutzfunktion für das an sich gegen Abnutzung empfindliche Filtermaterial. Mittels der Endlosbänder sind ebene und gerade Flächen bei dem Filtermittel verwirklicht, die beim Filtrieren eine abdichtende Führung, insbesondere mit feststehenden Anlageteilen, ausbilden, was verhindert, daß Verunreinigungen aus der Suspension in das Filtrat gelangen können.

Vorzugsweise weisen hierbei beide Endlosbänder an ihren dem Filtermaterial zugekehrten Bandflächen das Klebemittel auf. Dies führt zu einem besonders festen und haltbaren Verbund von Endlosbändern mit dem Filtermaterial, so daß auch an den Stellen einer Umlenkung des Filtermittels, beispielsweise im Bereich des Antriebes, es nicht zu einer Trennung der Bestandteile dieses Verbundes kommen kann. Diese Lösung unterscheidet sich auch von einer solchen, bei der ein Endlosband mit dem Filtermaterial mittels dem Klebemittel fest verbunden ist und das andere Endlosband ohne Klebstoff versehen zur Abstützung des angesprochenen Verbundes dient.

Bei einer weiteren besonders bevorzugten Ausführungsform des erfindungsgemäßen Filtermittels ist das Filtermaterial allseitig von den beiden Endlosbändern umgeben, die entlang ihrer Ränder unmittelbar dichtend aneinanderliegen. Hierdurch läßt sich zum einen noch ein besserer Schutz für das empfindliche Filtermaterial erreichen und zum anderen läßt sich der Verbund aus Filtermaterial und den beiden Endlosbändern über ein Klebemittel herstellen, das allein auf einer Bandfläche eines der beiden Endlosbänder anzuordnen ist, was die Herstellung des erfindungsgemäßen Filtermittels vereinfacht. Um hier sicherzustellen, daß das Filtrat beim Filtrieren nicht verschmutzt wird, wird vorzugsweise diejenige Bandfläche des Endlosbandes allein mit dem Klebemittel versehen, die dem Filtermaterial zugewandt der Suspension während des Filtrierens am nächsten liegt.

Vorzugsweise besteht das Filtermaterial des erfindungsgemäßen Filtermittels aus einem feinmaschigen oder feinporigen Gitter und/oder Sieb und/oder Gewebe aus Metall und/oder Kunststoff und/oder Textilien. Hierbei kann das Filtermaterial aus einem einbahnigen endlosen Band gebildet sein, das nur eine aus einem bestimmten Material bestehende Bindungsart aufweist, wie beispielsweise ein Filtergewebeband aus Metall. Es kann aber auch innerhalb der Bahn, je nach Anwendungsfall, hintereinander folgend aus Matten verschiedener Materialien bestehend eine andere Bindungsart gewählt werden. So könnte beispielsweise auf das soeben erwähnte, aus Metall bestehende Filtergewebe ein feinporiges, mit Durchstichen versehenes Gitter aus Kunststoff innerhalb der Bahn folgen.

Auch ist die Möglichkeit eröffnet, das Filtermaterial aus mehreren, übereinanderliegenden Bahnen zu bilden. So könnte beispielsweise zwischen zwei Filtergeweben aus Metall ein Kunststoff- oder Textilsieb eingeschlossen sein. Ferner sind auch verschiedene Materialpaarungen für das Filtermaterial verwendbar. So kann beispielsweise ein Kunststoff für ein Gewebe Verwendung finden, auf dem eine Nickelschicht aufgedampft ist. Dies erlaubt bei hoher Haltbarkeit das Erreichen ausgesprochen guter Filtrierergebnisse. Die hier vorgenommene Aufzählung ist nur beispielhaft. Verwirklichbar sind sämtliche in Anspruch 5 aufgeführten Alternativen.

Das Filtermittel kann vorzugsweise zusätzlich zu dem jeweiligen Klebemittel mit einer Nahtverbindung versehen sein, deren Nähte zwischen den durch die einzelnen Durchlässe gebildeten Abständen im Filtermittel verlaufen. Diese Nahtverbindung erhöht die Festigkeit des Verbundes, gebildet aus dem jeweiligen Endlosband mit dem Filtermaterial, was der Haltbarkeit des Filtermittels im Betrieb zugute kommt. Vorzugsweise ist hierbei die Nahtverbindung mit einem Nahtmaterial erstellt, das bei Berührung mit einer Flüssigkeit aufquillt und demgemäß die durch die Nähte innerhalb des Filtermittels hervorgerufenen Kanäle dichtend verschließt. Damit ist vermieden, daß das Filtrat verunreinigende Partikel durch die Nahtkanäle das Filtermittel ungefiltert durchqueren können.

Vorzugsweise besteht das Klebemittel aus einer thermoplastischen Heißklebefolie, die die jeweiligen Durchlässe ausspart. Die Verwendung einer Heißklebefolie als Klebemittel hat den Vorteil, daß sich ohne Schwierigkeiten die in dem jeweiligen Endlosband vorhandenen Durchlässe auch in der Heißklebefolie anordnen lassen.

Zwar könnte das Klebemittel, was noch im Bereich der Erfindung liegt, durch einen Klebstoff, insbesondere einen Zweikomponentenkleber gebildet sein. Hierbei ließe sich aber nicht mit Sicherheit ausschließen, daß dieser Kleber in die in dem jeweiligen Endlosband angeordneten Durchlässe oder gar in die durch das Filtermaterial gebildeten Poren oder Maschen eindringen könnte, was zu einer Verringerung der wirksamen Filterfläche des Filtermittels führen würde.

Bei einer weiteren bevorzugten Ausführungsform des erfindungsgemäßen Filtermittels sind in vorgebbaren Abständen voneinander, quer zur Längsrichtung des Filtermittels und mit diesem fest verbunden, Stege vorhanden. Mittels diesen Stegen lassen sich Verschmutzungen, beispielsweise in Form des auf der Oberseite des Filtermittels sich ablagernden Filterkuchens, beseitigen, was insbesondere dann eine Rolle spielt, wenn das Filtermittel zum Austrag des Filterkuchens in eine Richtung transportiert wird, die nicht der Horizontalen entspricht.

Die Erfindung betrifft auch ein Verfahren zum Herstellen des Filtermittels, bei dem auf eine der beiden Bandflächen mindestens eines Endlosbandes eine thermoplastische Heißklebefolie aufgebracht wird, bei dem die Durchlässe in das jeweilige Endlosband in Form eines Lochmusters eingebracht werden, und bei dem das Filtermaterial mittels Erwärmen der Heißklebefolie mit dem jeweiligen Endlosband fest verbunden wird. Bei diesem bevorzugten Verfahren ist also vorgesehen, daß das jeweilige Endlosband in einem Arbeitsgang, nachdem die Heißklebefolie auf ihm aufgeklebt ist, mit den Durchlässen, beispielsweise mittels eines Stanzvorganges, versehen wird, die dann auch die Heißklebefolie entsprechend durchgreifen. Dies gewährleistet, daß mit Sicherheit - auch nicht teilweise - die Durchlässe in dem Endlosband von der ihm zugehörigen Heißklebefolie überdeckt sind, was die Filterleistung des Filtermittels herabsetzen könnte.

Die Heißklebefolie wird bei einer Temperatur verarbeitet, die innerhalb ihres Erweichungsbereiches liegt, und mit einem über die Zeit wirkenden Anpreßdruck, wie er beim Heißsiegelpressen üblich ist. Auf diese Weise läßt sich das erfindungsgemäße Filtermittel mit Vorrichtungen, wie beispielsweise den angesprochenen Heißsiegelpressen, oder über beheizbare Kalander-Vorrichtungen ohne weiteres herstellen.

Die Erfindung betrifft ferner die Verwendung des Filtermittels, wie es vorstehend beschrieben ist, bei Bandfilteranlagen mit einer zu reinigenden Suspension und einer Aufnahmestelle für das Filtrat, bei der zumindest im Bereich der Aufnahmestelle das Filtermaterial zwischen der Suspension und einem Endlosband angeordnet ist. Durch diese Anordnung läßt sich das Endlosband mit einer ebenen und glatten Anlagefläche entlang von feststehenden Anlageteilen im Bereich der Aufnahmestelle verfahren, wodurch Undichtigkeiten während des Filtrierens mit Sicherheit vermieden sind. Darüber hinaus ist durch das Endlosband zumindest im Bereich der Aufnahmestelle eine Art Abstützung für das Filtermaterial gegeben, so daß auch für den Fall, daß, wie dies bei Unterdruckbandfilteranlagen der Fall ist, in der Aufnahmestelle ein Unterdruck erzeugt wird, das Filtermittel für einen Filtriervorgang nicht, wie sonst üblich, angehalten zu werden braucht, sondern weitertransportierbar ist, was ein kontinuierliches Filtrieren ermöglicht.

Im folgenden wird das erfindungsgemäße Filtermittel an Hand der Zeichnung mit den Figuren 1 bis 6 näher erläutert.

Es zeigen, überwiegend in prinzipieller Darstellung:
- Fig. 1: einen Ausschnitt eines ersten Ausführungsbeispiels des Filtermittels in Draufsicht;
- Fig. 2: eine vergrößerte Darstellung eines Schnittes entlang der Linie II - II in Fig.1;
- Fig. 3: einen Ausschnitt eines zweiten Ausführungsbeispiels des Filtermittels in Draufsicht;
- Fig. 4: eine vergrößerte Darstellung eines Schnittes entlang der Linie IV - IV in Fig.3;
- Fig. 5: eine Seitenansicht auf das Filtermittel, auf das ein Steg aufgesetzt ist;
- Fig. 6: einen Ausschnitt des Filtermittels mit Steg gemäß Fig.5 in Draufsicht.

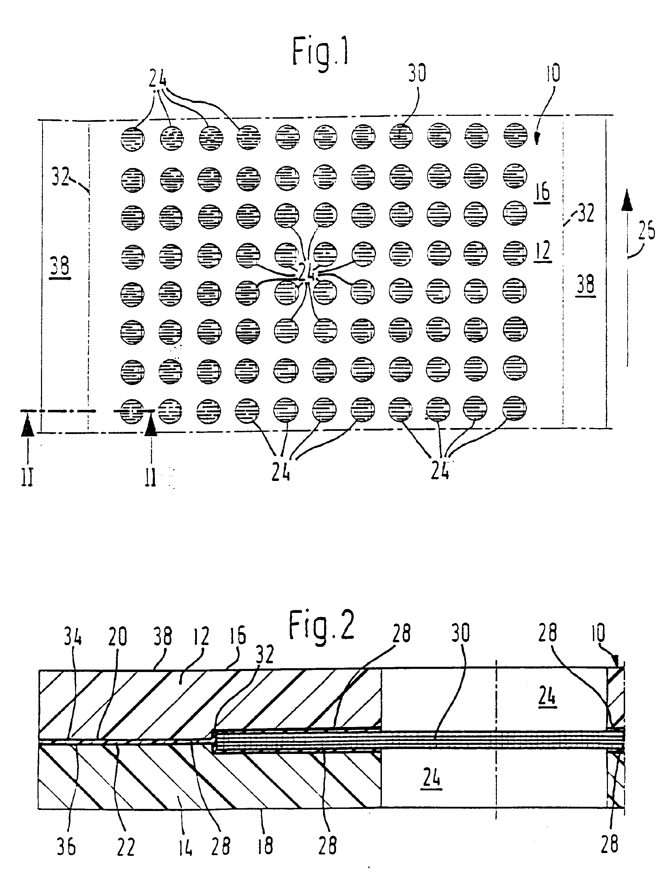

Die Fig.1 gibt einen Ausschnitt aus dem als Ganzes mit 10 bezeichneten erfindungsgemäßen Filtermittel in prinzipieller Darstellung wieder, die nicht maßstabsgetreu ist. Das Filtermittel 10 bildet als Ganzes gesehen ein endloses Band aus, das bei seinem Einsatz in Filtrieranlagen (nicht dargestellt) um Umlenkrollen herumgeführt ist, von denen mindestens eine zum Bewegen des Filtermittels 10 antreibbar ist.
Zur Bildung eines diesbezüglichen endlosen Filterbandes werden dessen Enden mechanisch oder mittels einer thermischen Behandlung in bekannter und daher nicht näher beschriebener Weise miteinander verbunden. Für die Verwendung des Filtermittels 10 in den üblichen Filtrieranlagen weist dieses insgesamt, je nach Anwendungsfall, eine Breite von 800 bis 1600 mm auf. Die Lange des Filtermittels kann wiederum abhängig von dem jeweiligen Anwendungsfall mehrere Meter betragen.

Wie sich insbesondere aus der Fig.2 ersehen läßt, die sich auf das erste Ausführungsbeispiel des Filtermittels 10 bezieht, weist dieses zwei Endlosbänder 12,14 auf. Als Endlosbänder 12,14 sind solche verwendbar, wie sie beispielsweise von der Firma Habasit in ihrem Technischen Leitfaden 2220 beschrieben sind. Besonders günstige Verhältnisse für die beiden Endlosbänder 12,14 sind gegeben, sofern man den in diesem Technischen Leitfaden beschriebenen Bandtyp HNA-12E(SPH-11) verwendet. Die Zugschicht dieses Bandtypes weist Polyester auf. Die in der Fig.2 zuoberst und zuunterst dargestellten beiden Bandflächen 16 bzw. 18 bilden jeweils die sogenannte Transportseite des angesprochenen Bandtypes aus, die aus vernetztem Polyurethan gebildet ist. Dieses Material ist sehr gleitfähig, was der Bewegbarkeit des Filtermittels 10 bei seinem Antrieb zugute kommt. Die beiden als Transportseite bezeichneten Bandflächen 16 und 18 weisen eine farbliche Kennung auf, was deren Verarbeitbarkeit zur Herstellung des Filtermittels 10 erleichtert. Die einander zugewandten Bandflächen 20 und 22 des Endlosbandes 12 bzw. 14 bilden die sogenannte Laufseite bei dem angesprochenen Bandtyp aus. Die die jeweilige Laufseite bildenden Bandflächen 20 und 22 haben ein gestrichenes Gewebe aus vernetztem Polyurethan. Auch die Bandflächen 20 und 22 weisen eine farbliche Kennung auf, die sich von der Kennung der beiden Bandflächen 16 und 18 unterscheidet, um die richtige Zuordnung der einzelnen Bestandteile des Filtermittels 10 bei seinem Zusammenbau zu erleichtern.

Die beiden Endlosbänder 12,14 haben eine Materialdicke von ungefähr 1,1 mm sowie ein Bandgewicht von 1,3 kg/m².

Die beiden Endlosbänder 12,14 weisen Durchlässe 24 in Form von eingestanzten kreisrunden Löchern auf, die das jeweilige Endlosband 12,14 vollständig durchgreifen (Fig.1,2). Der Durchmesser der kreisrunden Durchlässe 24 beträgt 6 mm bei einer Teilung von 9 mm. Die angegebene Teilung entspricht hierbei dem Abstand zwischen zwei unmittelbar benachbart gegenüberliegenden Lochrändern, der sich ergibt, sofern man eine gedachte Linie zwischen den jeweiligen Mittelpunkten der beiden zugehörigen Durchlässen 24 zieht, die, mit der Laufrichtung des Filtermittels 10, die in Fig.1 mit dem Pfeil 26 wiedergegeben ist, einen Winkel von vorzugsweise 45° einschließt.

An ihren einander zugekehrten Bandflächen 20 und 22 (Fig.2) weisen die beiden Endlosbänder 12 bzw. 14 jeweils ein Klebemittel 28 in Form einer thermoplastischen Heißklebefolie auf. Die hier zum Einsatz kommenden beiden Heißklebefolien werden von der Firma Guttacoll Klebstoffe GmbH & Co unter der Warenbezeichnung "GUTTACOLL Heißklebefolie P 51" vertrieben. Die jeweilige Folie P 51 ist gemäß Firmenangabe eine thermoplastische Heißklebefolie auf Basis Polyester zur lösemittelfreien, wasch- und reinigungsbeständigen Verklebung, insbesondere von Geweben- und Weich-PVC. Diese Heißklebefolie P 51 ist auf kontinuierlichen oder diskontinuierlichen Heißsiegelpressen und Kalandereinrichtungen verarbeitbar. Die Dichte dieser Heißklebefolie ist mit 1,28 g/cm³ angegeben. Ihr Erweichungsbereich liegt bei 120-125°C (Kofler) und ihre Wärmestandfestigkeit beträgt 105°C. Die offene Zeit (Hausmethode) beträgt bei 140°C 2 bis 4 s. Diese Heißklebefolie wird üblicherweise mit einer Trennfolie geliefert, die vor der Verarbeitung abzuziehen ist.

Die Dicke der Heißklebefolie 28 zusammen mit der Trennfolie beträgt unter Berücksichtigung eines Ungenauigkeitsbereiches von 10 % 50 bis 150µ. Bei der Verarbeitung der Heißklebefolie wird im Klebespalt vorzugsweise eine Temperatur von mindestens 135°C erzeugt.

Wie sich insbesondere aus der Fig.2 ersehen läßt, weist das erfindungsgemäße Filtermittel 10 an der Stelle der Durchlässe 24 kein Klebstoffmittel 28 in Form der Heißklebefolie P 51 auf. Es ist also gewährleistet, daß das zu filtrierende Medium die Durchlässe 24 passieren kann, ohne daß eine Beeinträchtigung durch das Klebstoffmittel 28 besteht. Auf diese Art und Weise lassen sich genau vorgebbare Materialbedingungen bei dem Filtermittel 10 verwirklichen, so daß die Filtrierleistung des Filtermittels 10 genau vorgebbar ist. Wie sich ferner aus Fig.2 ergibt, umschließen die beiden Endlosbänder 12 und 14 bis auf die Stellen der Durchlässe 24 das Filtermaterial 30 vollständig. Dieses Filtermaterial 30 ist ebenfalls als ein endloses Band ausgebildet.

Bei dem hier vorliegenden Ausführungsbeispiel des Filtermittels 10 findet als Filtermaterial 30 ein Metalldrahtgewebe Anwendung, das von der Firma Spörl GmbH + Co KG unter dem Warenzeichen "Betamesh" vertrieben wird. Dieses Metalldraht-Filtergewebe Betamesh ist aus allen verwebbaren Werkstoffen erstellbar, besteht jedoch vorwiegend aus 1.4401/AISI 316 rostfreiem Stahldraht. Die absolute Filterfeinheit dieses Metalldraht-Filtergewebes liegt je nach Anwendungsfall zwischen 15 bis 89µm. Dieses vor dem Zusammenfügen zu einem endlosen Band eine Matte bildende Metalldraht-Filtergewebe ist in allen möglichen Zuschnitten erhaltbar. In dem hier vorliegenden Ausführungsbeispiel gemäß den Fig.1 und 2 weist dieses Filtergewebe zwischen 650 bis 1450mm Breite auf. In der Fig.1 ist das seitliche Ende 32 des Filtermaterials 30 strichliniert wiedergegeben, wobei diese Linien im wesentlichen parallel zu dem die Transportrichtung andeutenden Pfeil 26 verlaufen.

Die Filterbreite des Filtermittels 10, also diejenige Größe, über die die Durchlässe 24 verteilt sind, beträgt im vorliegenden Ausführungsbeispiel 500 bis 1300mm. Das entspricht einer freien Lochfläche von 40,3 % für das gesamte Filtermittel 10. Die beiden das Filtermittel 10 bildenden Endlosbänder 12 und 14 sind derart zueinander angeordnet, daß, wie sich dies insbesondere aus Fig.2 ergibt, die Durchlässe 24 eines jeden Endlosbandes miteinander decken.

Bei dem allseitigen Umfassen des Filtermaterials 30 stehen die beiden Endlosbänder 12 und 14 seitlich um einen gewissen Überstand über das Ende 32 des Filtermaterials 30 hervor, wobei sie im Bereich dieses Überstandes mit ihren Rändern 34 bzw. 36 unmittelbar dichtend aneinanderliegen. Die Dichtwirkung wird hierbei über das jeweilige Klebemittel 28 erreicht, die an der Stelle des Randbereiches 38, der bei dem ersten Ausführungsbeispiel durch die beiden Ränder 34 und 36 gebildet ist, aufgrund des Wärme- und Druckeinflusses bei ihrer Verarbeitung, bei der sie einen flüssigen Zustand einnehmen, zu einer im wesentlichen homogenen Klebeschicht verschmolzen sind. Im Bereich des Filtermaterials 30 teilt sich dann diese homogene Schicht wiederum in zwei Schichten von Klebemittel 28 auf. Es sei nochmals erwähnt, daß die Darstellung in Fig.2 nur sehr vereinfacht die wirklichen Verhältnisse hier wiedergibt. Da die jeweilige Heißklebefolie 28 bei ihrer Verarbeitung flüssig wird, gelangt zumindest ein Teil des jeweiligen Klebemittels 28 innerhalb des Bereiches des Filtermaterials 30, das von dem jeweiligen Klebemittel 28 abgedeckt ist, so daß eine weitgehende Vernetzung von Klebemittel 28 und Filtermaterial 30 erreicht ist. Insgesamt ist das erfindungsgemäße Filtermittel 10 eine Art Sandwich, dessen Komponenten Endlosbänder 12 und 14 sowie das Filtermittel 30 einen äußerst festen Verbund miteinander bilden.

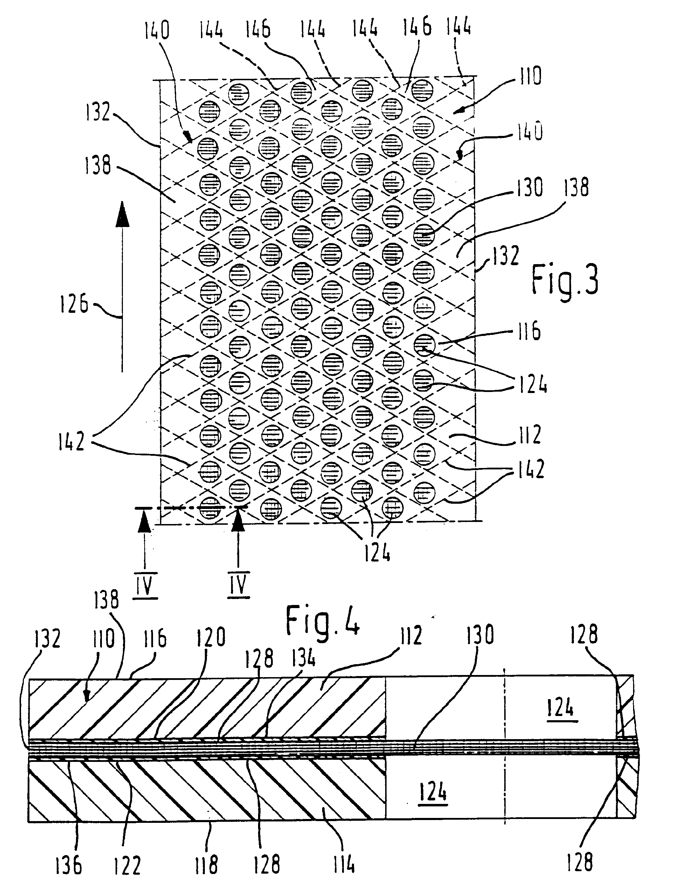

Die nachfolgenden Ausführungsbeispiele gemäß den Fig.3 und 4 sowie 5 und 6 werden nur noch insofern erläutert, als sie sich von dem soeben beschriebenen Ausführungsbeispiel nach den Fig.1 und 2 unterscheiden, wobei die dem ersten Ausführungsbeispiel entsprechenden Teile mit denselben, aber jeweils um 100 höher angegebenen Bezugsziffern bezeichnet sind.

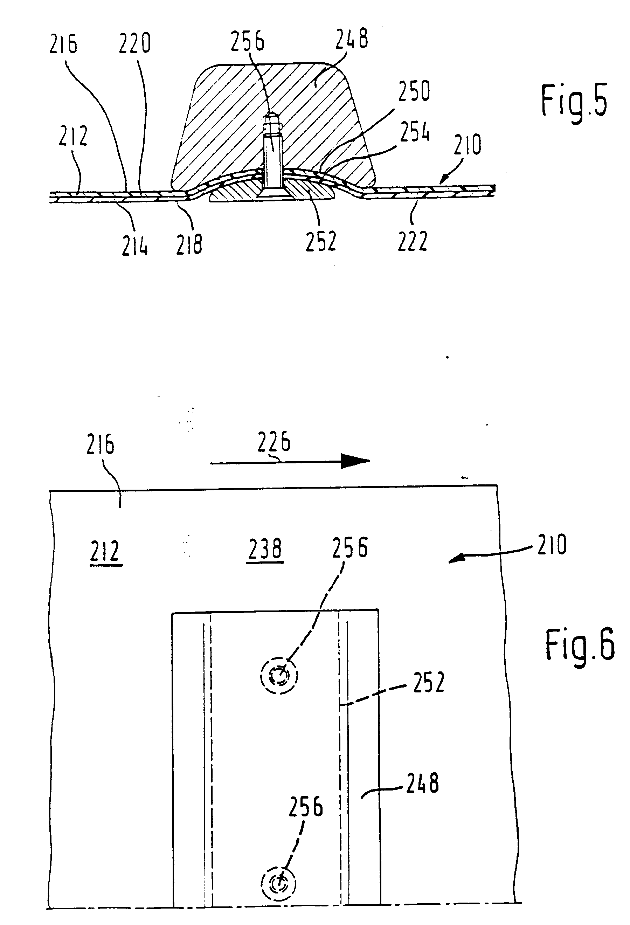

Bei dem zweiten Ausführungsbeispiel (Fig.4) erstreckt sich das Filtermaterial 130 über die gesamte Breite der einander benachbart gegenüberliegenden Endlosbänder 112 und 114. Das Filtermaterial 130 mündet also randseitig ins Freie. Die beiden Klebemittel 28 in Form der Heißklebefolie erstrecken sich demgemäß entlang den Bandflächen 120 und 122 ebenfalls über die gesamte Breite des Filtermittels 110, wobei wiederum die Durchlässe 124 freigegeben sind, die allein von dem Filtermaterial 130 durchquert sind.

Wie insbesondere die Fig.3 zeigt, ist zusätzlich zu dem jeweiligen Klebemittel 128 das Filtermittel 110 mit einer als Ganzes mit 140 bezeichneten Nahtverbindung versehen, deren Nähte 142 zwischen den durch die einzelnen Durchlässe 124 gebildeten Abständen im Filtermittel verlaufen. Die Nähte 142 sind aus einem Material, das ihnen in Verbindung mit einer Flüssigkeit ein Aufquillen zum Verschließen ihrer Nahtkanäle im Filtermittel 110 ermöglicht. Wie sich insbesondere aus Fig.3 ergibt, verlaufen die einzelnen Nähte 142 der Nahtverbindung 140, die in Fig.4 der Einfachheit halber nicht dargestellt ist, entlang von sich kreuzenden Linien, die schräg zu der mit 126 angegebenen Transportrichtung des Filtermittels 110 verlaufen. Zwei einander unmittelbar benachbart gegenüberliegende Nahtlinien 144, die in ein und derselben Richtung verlaufen, schließen hierbei einen Streifen 146 ein, in dem die Durchlässe 124 angeordnet sind.

Auch bei dem Ausführungsbeispiel gemäß den Fig.3 und 4 ist an deren einander gegenüberliegenden Enden ein Randbereich 138 freigelassen, in dem keine Durchlässe 124 angeordnet sind.

Die in dem zweiten Ausführungsbeispiel genannte Nahtverbindung 140 ist besonders dann zweckmäßig, sofern das Filtermittel einer besonders hohen Beanspruchung im Betrieb ausgesetzt ist. Ansonsten kann auf die Nahtverbindung 140 auch verzichtet werden und es ergibt sich dann ein Aufbau für das Filtermittel 110, wie es in vergrößerter Darstellung im Schnitt in Fig.4 teilweise dargestellt ist.

Bei der Ausführungsform gemäß den Fig.5 und 6 ist das Filtermittel 210 nur noch schematisch angedeutet. Das dort dargestellte Filtermittel 210 entspricht allerdings den bisher beschriebenen Ausführungsformen des Filtermittels 10,110. Auf das Filtermittel 210 ist ein Steg 248 aufgesetzt, dessen Querschnitt trapezförmig ist. Dieser Steg 248 weist an seiner dem Endlosband 212 zugewandten Seite eine konkave Wölbung 250 auf. In diese konkave Wölbung 250 eingelegt ist das Filtermittel 210. Auf der dem Steg 248 gegenüberliegenden Seite ist eine leistenförmige Gegenhalteplatte 252 angeordnet, die sich quer und parallel zu dem Steg 248 verlaufend zur Längsrichtung des Filtermittels 210 erstreckt, die parallel zur Förderrichtung 226 verläuft. Die Länge dieser Gegenhalteplatte 252 entspricht im wesentlichen der Länge des Steges 248. Die Gegenhalteplatte 252 weist an ihrer dem Filtermittel 210 zugewandten Seite eine konvexe Wölbung 254 auf, deren Wölbungsverlauf im wesentlichen der konkaven Wölbung 250 des Steges 248 angepaßt ist. Um einen festen Halt des Steges 248 auf dem Filtermittel 210 zu erreichen, sind Schrauben 256 üblicher Art vorgesehen, die das Filtermittel 210 durchgreifen und die die Gegenhalteplatte 252 fest mit dem Steg 248 verbinden.

Die Unterseite der Gegenhalteplatte 252 schließt, wie dies insbesondere die Fig.5 zeigt, bündig mit der Bandfläche 218 des Endlosbandes 214 ab. Bei dem als endloses Band ausgebildeten Filtermittel 210 sind die Stege 248 in vorgebbaren Abständen voneinander auf diesem angeordnet. Wie insbesondere die Fig.6 zeigt, lassen die Stege 248 sowie die Gegenhalteplatten 252 einen Randbereich 238 auf dem Filtermittel 210 frei, der auch nicht von Durchlässen 224 durchgriffen ist.

Das erfindungsgemäße Filtermittel 10,110,210 wird überwiegend bei sogenannten Bandfilteranlagen (nicht dargestellt) Verwendung finden. Diese meist automatisch arbeitenden Bandfilteranlagen unterteilen sich in Schwerkraft-, Vakuum- und Druckbandfilteranlagen. All diesen Bandfilteranlagen gemein ist, daß das Filtermittel durch eine zu reinigende Suspension geschleppt oder transportiert wird, die einem Behälter zuführbar ist, durch den das Filtermittel hindurchbewegt wird. Ferner ist eine Aufnahmestelle vorgesehen für die Aufnahme des Filtrats, wobei das Filtermittel die Trennstelle zwischen der in dem Behälter befindlichen Suspension und der Aufnahmestelle (nicht dargestellt) bildet. Diese Bandfilteranlagen sind dabei derart ausgelegt, daß die Flüssigkeit der Suspension, um in die Aufnahmestelle zu gelangen, das Filtermittel für den Filtriervorgang durchqueren muß. Hierbei ergeben sich oftmals Undichtigkeiten im Randbereich der Filtermittel, weil diese nicht ohne weiteres sich bündig und dichtend längs der Aufnahmestelle bewegen lassen.

Die Bandflächen 16,18;116,118 und 216,218 bestehen, wie bereits ausgeführt, aus besonders gleitfähigem Polyurethan, das auch eine sehr glatte Oberfläche ausbildet. Demgemäß sind in den Randbereichen 38,138 und 238 (ohne Nahtverbindung) des Filtermittels 10,110,210 Führungsbahnen gebildet, die mit entsprechend ebenen und glatten Flächen zur Bildung einer Führung mit feststehenden Führungsteilen der Bandfilteranlage (nicht dargestellt) im Bereich der Aufnahmestelle zusammenwirken.

Im übrigen ist durch das für die jeweiligen Endlosbänder verwendete Material das jeweilige Filtermittel insgesamt steif ausgebildet, so daß es insbesondere beim Anfahren oder Anhalten der Bandfilteranlagen nicht zu einem Aufwerfen des Filtermaterials 30,130 und damit zu Undichtigkeiten kommen kann. Durch diese steife Ausbildung des erfindungsgemäßen Filtermittels 10,110,210 ist auch ein kontinuierlicher Filtriervorgang mit den bekannten Bandfilteranlagen möglich, was bisher zumindest nicht uneingeschränkt der Fall war. Die jeweiligen Endlosbänder 12,14;112,114;212,214 bilden eine Stütze für das eigentliche Filtermaterial 30,130 aus und sorgen insbesondere bei Unterdruckbandfilteranlagen dafür, daß dieses Filtermaterial nicht in Richtung der Aufnahmestelle eingesogen wird, was man bisher hingenommen hat, wobei allerdings der Antrieb für das jeweilige Filtermittel abgeschaltet wurde, um das Filtermaterial nicht zu zerstören. Erst wenn das Filtermaterial entsprechend verschmutzt war, hat man das Filtermittel für den weiteren Filtriervorgang weitertransportiert. Mit dem erfindungsgemäßen Filtermittel 10,110, 210 sind solche Zwischenhalte nicht mehr notwendig und die bekannten Bandfilteranlagen lassen sich, sofern sie mit dem erfindungsgemäßen Filtermittel ausgerüstet sind, kontinuierlich betreiben, was einer Erhöhung der Filtrierleistung gleich kommt. Da sich mit dem Filtermittel ferner Undichtigkeiten im Bereich der Aufnahmestelle mit Sicherheit vermeiden lassen, ist auch das Filtrierergebnis verbessert.

Das bisher beschriebene erfindungsgemäße Filtermittel läßt sich aus handelsüblichen, auf dem Markt angebotenen Materialien zusammensetzen, was besonders kostengünstig ist. Es ist aber auch denkbar, das Filtermittel dahingehend abzuändern, daß die untere Bandfläche 18,118,218, die um Umlenkrollen herumgeführt ist, als sogenannte Laufseite ausgebildet ist, die über ein sogenanntes gestrichenes Gewebe verfügt, aufgrund deren Rauhigkeit eine bessere Mitnahme, insbesondere im Bereich der angetriebenen Umlenkrolle, gewährleistet ist.

Ferner liegt es auch noch im Bereich der Erfindung, das jeweilige Filtermaterial 30,130 über ein entsprechendes Klebemittel 28,128 nur mittels einem Endlosband 12,112 oder 14,114 mitzuführen. Dies würde beispielsweise für das Ausführungsbeispiel gemäß Fig.2 bedeuten, daß das Endlosband 12 mit der ihm zugeordneten Heißklebefolie 28 entfernt wäre. Das Filtermaterial 30 würde dann mit seiner Fläche, die der Heißklebefolie 28 des anderen Endlosbandes 14 gegenüberliegend und von der Bandfläche 22 abgekehrt angeordnet wäre, der Umgebung unmittelbar zugekehrt sein. Zweckmäßigerweise ist dann auch im Randbereich 38 das Klebemittel 28 in Form der Heißklebefolie des Endlosbandes 14 entfernt. Auch hier ließe sich eine saubere Führung im Bereich der Aufnahmestelle für ein diesbezüglich abgeändertes, erfindungsgemäßes Filtermittel erreichen.

Für das Aufbringen der jeweiligen Heißklebefolie 28,128 auf das jeweilige Endlosband 14,114,214 oder 18,118,218 wird diese auf 130°C erwärmt und über einen Zeitraum von 120 s mit 6 bar auf das jeweilige Endlosband aufgedrückt. Sobald die einander zugehörigen Endlosbänder 12,14;112,114;212,214 unter Einschluß des jeweiligen Filtermaterials 30,130 bei der Herstellung des Filtermittels 10,110,210 mit sich deckenden Durchlässen 24,124 übereinanderliegen, wird nochmals mit einer entsprechenden Temperatur über einen vergleichbaren Zeitraum ein Druck von 6 bar von außen auf das Filtermittel aufgebracht, was einen festen Verbund der Einzelkomponenten des erfindungsgemäßen Filtermittels ergibt.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Filtermittel (10,110,210), bestehend aus mindestens einem antreibbaren Endlosband (14,114,214), das mit Durchlässen (24,124) versehen ist, und mit einem die Durchlässe (24,124) überdeckenden Filtermaterial (30,130), wobei zumindest ein Endlosband (14,114,214) auf einer seiner beiden Bandflächen (22,122,222) ein Klebemittel (28,128) aufweist, das das Filtermaterial (30,130) mit diesem Endlosband (14,114,214) fest verbindet, dadurch gekennzeichnet, daß das Filtermittel ein zweites Endlosband (12,112,212) mit Durchlässen (24,124) aufweist, die sich mit den Durchlässen (24,124) des anderen Endlosbandes (14,114, 214) im wesentlichen decken, daß die beiden Endlosbänder (12,14; 112,114; 212,214) zumindest über das Klebemittel (28,128) des einen Endlosbandes (14,114,214) fest miteinander verbunden sind und daß das Filtermaterial (30,130) zwischen den beiden Endlosbändern aufgenommen ist.

2. Filtermittel nach Anspruch 1, dadurch gekennzeichnet, daß beide Endlosbänder (12,14;112,114;212,214) an ihren dem Filtermaterial (30,130) zugekehrten Bandflächen (20,22; 120,122;220,222) das Klebemittel (28,128) aufweisen.

3. Filtermittel nach Anspruch 1 oder 2, dadurch gekennzeichnet, daß das Filtermaterial (30) allseitig von den beiden Endlosbändern (12,14) umgeben ist, die entlang ihrer Ränder (34,36) unmittelbar dichtend aneinanderliegen.

4. Filtermittel nach einem der Ansprüche 1 bis 3, dadurch gekennzeichnet, daß das Filtermaterial (30,130) aus einem feinmaschigen oder feinporigen Gitter und/oder Sieb und/oder Gewebe aus Metall und/oder Kunststoff und/oder Textilien besteht.

5. Filtermittel nach einem der Ansprüche 1 bis 4, dadurch gekennzeichnet, daß dieses zusätzlich zu dem jeweiligen Klebemittel (128) mit einer Nahtverbindung (140) versehen ist, deren Nähte (142) zwischen den durch die einzelnen Durchlässe (124) gebildeten Abständen im Filtermittel (110) verlaufen.

6. Filtermittel nach einem der Ansprüche 1 bis 5, dadurch gekennzeichnet, daß das Klebemittel (28,128) aus einer thermoplastischen Heißklebefolie besteht, die die jeweiligen Durchlässe (24,124,224) ausspart.

7. Filtermittel nach einem der Ansprüche 1 bis 6, dadurch gekennzeichnet, daß in vorgebbaren Abständen voneinander, quer zur Längsrichtung des Filtermittels (210) verlaufend und mit diesem fest verbunden, Stege (248,252) vorhanden sind.

8. Verfahren zum Herstellen eines Filtermittels (10,110,210) nach Anspruch 1, bei dem auf eine der beiden Bandflächen (22,122,222) mindestens eines Endlosbandes (14,114,214) eine thermoplastische Heißklebefolie (28,128) aufgebracht wird, bei dem die Durchlässe (24,124) in das jeweilige Endlosband in Form eines Lochmusters eingebracht werden und bei dem das Filtermaterial (30,130) mittels Erwärmen der Heißklebefolie (28,128) mit dem jeweiligen Endlosband fest verbunden wird.

9. Verwendung des Filtermittels nach einem der Ansprüche 1 bis 7 bei Bandfilteranlagen mit einer zu reinigenden Suspension und mit einer Aufnahmestelle für das Filtrat, bei der zumindest im Bereich der Aufnahmestelle das Filtermaterial (30,130) zwischen der Suspension und einem Endlosband (12,112,212) angeordnet ist.

## Claims

1. Filter (10, 110, 210), consisting of at least one endless belt (14, 114, 214), which can be driven, which is provided with openings (24, 124), and with a filter material (30, 130) covering the openings (24, 124), at least one endless belt (14, 114, 214) comprising on one of its two belt surfaces (22, 122, 222) an adhesive (28, 128), which securely connects the filter material (30, 130) to this endless belt (14, 114, 214), characterised in that the filter comprises a second endless belt (12, 112, 212) with openings (24, 124), which coincide substantially with the openings (24, 124) of the other endless belt 114, 214), that the two endless belts (12, 14; 112, 114; 212, 214) are securely connected to each other at least by way of the adhesive (28, 128) of one endless belt (14, 114, 214) and that the filter material (30, 130) is received between the two endless belts.

2. Filter according to Claim 1, characterised in that both endless belts (12, 14; 112, 114; 212, 214) comprise the adhesive (28, 128) on their belt surfaces (20, 22; 120, 122; 220, 222) facing the filter material (30, 130).

3. Filter according to Claim 1 or 2, characterised in that the filter material (30) is surrounded on all sides by the two endless belts (12, 14), which bear directly one against the other in a tightly fitting manner along their edges (34, 36).

4. Filter according to one of Claims 1 to 3, characterised in that the filter material (30, 130) consists of a fine-mesh or fine-pored lattice and/or mesh and/or fabric of metal and/or synthetic material and/or textiles.

5. Filter according to one of Claims 1 to 4, characterised in that in addition to the respective adhesive (128), the filter is provided with a seam connection (140), whereof the seams (142) extend between the spaces formed by the individual openings (124) in the filter (110).

6. Filter according to one of Claims 1 to 5, characterised in that the adhesive (28, 128) consists of a thermoplastic hot adhesive foil, which has gaps for the respective openings (24, 124, 224).

7. Filter according to one of Claims 1 to 6, characterised in that at intervals which can be predetermined, webs (248, 252) are provided extending transversely with respect to the longitudinal direction of the filter (210) and securely connected to the latter.

8. Method for producing a filter (10, 110, 210) according to Claim 1, in which a thermoplastic hot adhesive foil (28, 128) is applied to one of the two belt surfaces (22, 122, 222) of at least one endless belt (14, 114, 214), in which the openings (24, 124) are introduced into the respective endless belt in the form of a pattern of holes and in which the filter material (30, 130) is securely connected to the respective endless belt by means of heating the hot adhesive foil (28, 128).

9. Use of the filter according to one of Claim 1 to 7 in belt filter installations with a suspension to be separated and with a receiving location for the filtrate, in which at least in the region of the receiving location the filter material (30, 130) is disposed between the suspension and an endless belt (12, 112, 212).

## Revendications

1. Dispositif de filtrage ou moyen de filtrage (10, 110, 210) comprenant, au moins, une bande sans fin pouvant être entraînée ou actionnée (14, 114, 214) qui est percée d'ouvertures ou de passages (24, 124), et une matière filtrante (30, 130) couvrant lesdites ouvertures ou lesdits passages, dans lequel, l'une, au moins, des deux faces (22, 122, 222) de l'une, au moins, des bandes sans fin (14, 114, 214), est couverte d'un adhésif (28, 128), en ce que la matière filtrante (30, 130) est solidaire de ladite bande sans fin (14, 114, 214), caractérisé en ce que la matière filtrante possède une seconde bande sans fin (12, 112, 212) percée d'ouvertures ou de passages (24, 124) qui coïncident pratiquement avec les ouvertures ou les passages (24, 124) de l'autre bande sans fin (14, 114, 214), en ce que les deux bandes sans fin (12, 14, 112, 114, 212, 214) sont solidement reliées ensemble, au moins, par l'adhésif (28, 128) de l'une des bandes sans fin (14, 114, 214), et en ce que la matière filtrante (30, 130) est interposée entre les deux bandes sans fin.

2. Dispositif ou moyen de filtrage selon la revendication 1, caractérisé en ce que les deux bandes sans fin (12, 14, 112, 114, 212, 214) comportent un adhésif (28, 128) sur leurs surfaces (20, 22, 120, 122, 220, 222) en regard de la matière filtrante (30, 130).

3. Dispositif ou moyen de filtrage selon la revendication 1 ou 2, caractérisé en ce que la matière filtrante est entourée de tous les côtés par les deux bandes sans fin (12, 14) dont les deux bords (34, 36) s'appliquent directement l'un contre l'autre de manière à produire un joint étanche.

4. Dispositif ou moyen de filtrage selon l'une quelconque des revendications 1 à 3, caractérisé en ce que la matière filtrante (30, 130) se compose d'une grille ou d'un grillage à fines mailles ou à fins pores et/ou d'un tamis et/ou d'un tissu métallique et/ou de matière synthétique et/ou textile.

5. Dispositif ou moyen de filtrage, selon l'une quelconque des revendications 1 à 4, caractérisé en ce que celle-ci comporte, en plus dudit adhésif (128), une couture d'assemblage ou de liaison (140), dont les points s'étendent entre les ouvertures ou les passages individuels (124) fermés par les ouvertures ou les passages individuels (124) dans le moyen de filtrage (110).

6. Dispositif ou moyen de filtrage selon l'une quelconque des revendications 1 à 5, caractérisé en ce que l'adhésif est une feuille thermoplastique adhérant à chaud qui ménage les différents passages ou les différentes ouvertures (24, 124, 224).

7. Dispositif selon l'une quelconque des revendications 1 à 6, caractérisé en ce que des passerelles ou des barrettes (248, 252), solidaires du moyen ou du dispositif de filtrage (210) s'étendent, à des intervalles prédéterminés, transversalement à l'axe longitudinal dudit moyen ou dudit dispositif de filtrage (210).

8. Procédé pour produire un moyen ou un dispositif de filtrage (10, 110, 210) tel que spécifié dans la revendication 1, dans lequel on applique sur l'une, au moins, des deux surfaces (22, 122, 222) d'une bande sans fin (14, 114, 214), une feuille thermo-adhésive (28, 128) dans laquelle on produit les ouvertures ou les passages (24, 124) dans ladite bande sans fin sous la forme d'un motif ou d'un arrangement de trous et où on rend la matière filtrante (30, 130) solidaire de la feuille thermo-adhésive (28, 128) avec ladite bande sans fin en chauffant ladite feuille thermo-adhésive (28, 128).

9. Utilisation de la matière ou du dispositif de filtrage selon les revendications 1 à 7, caractérisée en ce que sur les installations équipées de rubans de filtrage avec une suspension nettoyante et avec un emplacement de réception pour le filtrat, où, au moins, dans la région du point de réception, la matière filtrante (30, 130) est placée entre la suspension et une bande sans fin (12, 112, 212).
